# EUROPEAN PATENT APPLICATION

(11) **EP 0 847 177 A2**
(43) Date of publication of application: **10.06.1998**
(21) Application number: 97660124.5
(22) Date of filing: 20.11.1997
(51) Int. Cl.: H04M 3/42, H04M 7/00, H04Q 3/00

(54) **Method of allocating a temporary auxiliary telephone number**

(30) Priority: 20.11.1996 FI 964639
(71) Applicant: HELSINGIN PUHELIN OY - HELSINGFORS TELEFON AB, 00131 Helsinki (FI)
(72) Inventor: Fils, Henry, 00140 Helsinki (FI)
(74) Representative: Lipsanen, Jari Seppo Einari

(57) **Abstract**

The invention relates to a method of allocating a temporary auxiliary telephone number for a holder of a subscibtion agreement acting as an orderer for the corresponding service in an intelligent-network-based telephone system, in which the A-subscriber number of the orderer is available. According to the invention, the identity of the orderer of the temporary auxiliary number is verified automatically on the basis of the A-subscriber number of the service orderer, by consulting a table, the orderer is allocated on the basis of the corresponding A-subscriber number a temporary unlisted auxiliary number having an active time period selectable by the orderer within preset limits, and the orderer of the service is given a password permitting alteration of the active time period of the temporary auxiliary number by the orderer only.

## Description

The present invention relates to a method according to the preamble of claim 1 for allocating a temporary auxiliary telephone number.

In the prior art no method has been available for automatic allocation of an unlisted auxiliary telephone number. Manual techniques have been offered for ordering a separate number, but this has involved detection of subscriber identity, significant administrative costs and, moreover, the service has been available during office hours only, whereby the user has had no provision of personal control on the function of the number (such as enable/disable) according to his own needs during the active time period of the ordered service.

It is an object of the present invention to overcome the drawbacks of the above-described technique and to provide an entirely novel type of method for allocating a temporary auxiliary telephone number.

The goal of the invention is achieved by automatically verifying the identity of the party ordering the temporary auxiliary telephone number on the basis of the A-subscriber number (calling party number), then consulting a table to allocate the holder of the A-subscriber number a temporary unlisted auxiliary telephone number with a short-term preset maximum active time period, and finally giving a password to the orderer of the service, with the help of which the orderer only can alter the active time period of the allocated auxiliary telephone number.

More specifically, the method according to the invention is characterized by what is stated in the characterizing part of claim 1.

The invention offers significant benefits.

The invention permits the receiving party of a call to conceal the real called number from the calling party. Thus, the present invention can lower the threshold of ordering/cancelling such an auxiliary telephone number by making it totally automated as to take place via a normal phone without the assistance of a human operator for temporary number ordering/cancellation and thus keeping the real number of the orderer totally secret.

Thus, the holder of the subscribtion agreement is given an opportunity to use an automated routine of ordering for a limited active time period an "virtual number" that may be safely revealed to parties whose call is desirable within a given period but not any more after the lapse of said period or if it is desirable that the identity of the call-receiving party should remain concealed.

Additionally, the number concealing scheme may be used in the reverse direction (particularly in conjunction with "chat room" services): the number of the calling party need not necessarily be indicated in incoming calls passed via the virtual line, not even when the number of the calling party is not particularly protected (e.g., by being an unlisted number).

The invention will also benefit users who have a need for disclosing their telephone number in public media advertisements and the like involving wider public interest but do not wish their work or home telephone number to be subject to an extended flow of telephone call inquiries or the disturbance of frivolous calls, examples of such potential users being:
- Classified ads advertisers in the category "Rent"
- Classified ads advertisers in the category "Sell"
- Numbers given in TV ads, etc.

By virtue of the invention, people calling on service lines of the type "Chat room" may safely reveal the temporary auxiliary telephone number to the other party for intimate communication, yet keeping his/her permanent subscriber number concealed.

Advertisers in the print media classified ads category "Personal" can utilize the invention in a novel manner: the temporary telephone number can be made public, thereby urging those interested to call, and yet being able to bar incoming calls at any time and/or cancel the service permanently.

In the following, the invention will be examined in greater detail with the help of exemplifying embodiments illustrated in the appended drawings in which
Figure 1 shows the flow diagram of the temporary number allocation scheme according to the method; and
Figure 2 shows the flow diagram of the use of the temporary number allocated by means of the scheme according to the invention.

In the following general description arbitrary service numbers are used, which means that a more appropriate numbering scheme (using free and task-related numbers) must be chosen in a practical implementation. The description does not cover the option that the subscriber is directed via a script to order either a toll-free number (e.g., with a 0800- prefix) or a "conventional" virtual number.

According to the invention, the service can be ordered automatically only from the number to which also the incoming calls via the virtual number are to be directed.

In the case that service is ordered from a number different from that to which the incoming calls of the virtual number are to be directed, some type of manually attended service order site (e.g., using service number of the type "operator help") must be arranged, or alternatively, other measures must be taken to assure that the service orderer assumes the responsibility of paying for the service.

The ordering number of the service can be selected an unallowable number (as a premium rate number) if applicable to the corresponding telephone network (country dependent), whereby the orderer can block according to his/her decision the use of the service from his/her subscription connection.

The service can be implemented only in networks equipped with digital switching centers.

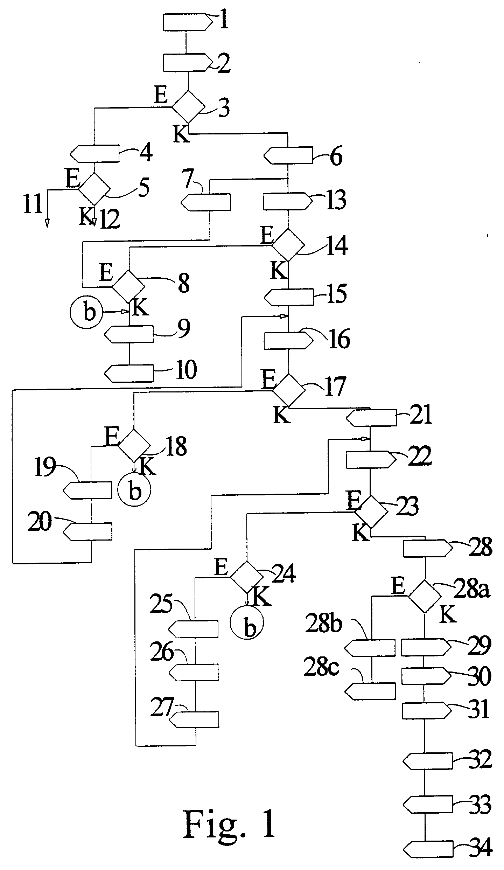

Now referring to Fig. 1, the implementation of the ordering service is described in the following text in which the discussed details such as time limits and number series like ordering numbers, password lengths etc. must be understood to have an exemplary character only not limiting the scope of the invention.

First, the subscriber initiates ordering the service by lifting the telephone set receiver and dialling the number such as *69* required to select the service, refer to the flow diagram, item 1.

This selection directs the service request call in an SSP switching center (that is, a digital switch offering intelligent network services) to trigger an IN service (performed by the intelligent network controller - SCP), item 2, whereby the following steps are carried out (for greater clarity of the text, (IN announcements are written in *italics*), subscriber action in <brackets>, function of IN script in (parentheses), and branches of alternative action are written underlined):

In item 3, the IN script verifies that the A-subscriber number is identified.

If A-subscriber number not identified, item 4 gives an announcement:

*Service not available for this number.*

If A-subscriber number is identified, item 6 gives an announcement:

*Welcome to our ordering service; note that the calls received via the ordered temporary number can be connected only to this number from which you are calling now.*

*Remember that you can, however, disable and again enable or even permanently deactivate the temporary number from any subscriber number using the password to be given you soon.*

*Please note that the service will be activated only for the period you can define in an instant; and because your own telephone number is recorded in our invoicing system only, it will remain concealed to all calling parties.*

*Correspondingly, the caller's number will not be shown to you. Now dial the number to which the calls dialled to your temporary auxiliary number you wish to be connected.*

<subscriber dials the number from which the service is being ordered> at item 13.

In item 14, the IN script verifies that the number dialled by the subscriber is the same as the above-mentioned A-subscriber number and, with positive identification, guides the caller to enter the start time and duration of the desired service.

With a positive result of the number verification, item 15 triggers an announcement:

*Please now enter the month, day and time at which you want your temporary auxiliary number to be activated; for instance, to set the activation time as October 18, 15:00, dial one-eight-one-zero-one-five-zero-zero. The time can be set to any full quarter of an hour. You can defer the activation of the temporary number by maximally two weeks from this ordering instant of the service.*

With a negative result of the number verification, item 7 triggers an announcement:

*Your entry was incorrect, recheck the number from which you are calling. This service can be ordered only from the same number you wish the calls to be connected. In* *the case that you dialled your subscriber number incorrectly, please redial.*

If the subscriber makes three invalid entries in a sequence (verified in item 8), item 9 triggers an announcement:

*Your attempt to order this service has not been accepted, for further advice, please contact our customer service, number "nnnnnnn..."*

Subsequently, the call is terminated at item 10 of the script and the caller hears the busy tone as a signal of terminated attempt of temporary auxiliary number ordering.

If the dialling of the A-subscriber number in item 14 was successful, the script proceeds to item 16, where

<subscriber enters the start time of the temporary auxiliary telephone number service>

(In item 17, the IN script verifies the start time of the temporary auxiliary telephone number service entered by the subscriber)

After the subscriber has entered the activation time of the temporary number correctly, item 21 triggers the following announcement:

*Please now enter the month, day and time at which you want your temporary auxiliary number to be deactivated; for instance, to set the time of deactivation* as *October 18, 18:30, dial one-eight-one-zero-one-eight-three-zero. The time can be set to any full quarter of an hour. You can extend the activation period of the service up to NN week(s) from the activation of the number.*

With an incorrect entry of the temporary auxiliary number activation time, item 19 triggers an announcement:

*Your entry was incorrect.*

Next, item 20 triggers the following announcement:

*Please now enter the month, day and time at which you want your temporary auxiliary number to be activated; for instance, to set the activation time as October 18, 15:00, dial one-eight-one-zero-one-five-zero-zero. The time can be set to any full quarter of an hour. You can defer the activation of your temporary number maximally by two weeks from this ordering instant of the service.*

If the subscriber makes five invalid entries in a sequence, item 18 proceeds to announcement 9:

*Your attempt to order this service has not been accepted, for further advice, please contact our customer service, number "nnnnnnn....".*

Subsequently, the call is terminated at item 10 of the script and the caller hears the busy tone as a signal of terminated ordering attempt.

If the entry of the temporary number activation time was successful, item 21 tiriggers an announcement:

*Please now enter the month, day and time at which you want your temporary auxiliary number to be deactivated; for instance, to set the deactivation time as October 18, 15:00, dial one-eight-one-zero-one-five-zero-zero. The time can be set to any full quarter of an hour. You can order the activation of the temporary number to last maximally NN weeks.*

The end time of the temporary auxiliary number service is selected in item 22.

<subscriber enters the deactivation time of the temporary number>

In item 23, the IN script verifies the duration of the temporary auxiliary number validation set by the orderer.

After the start/end times of the offered service are thus properly entered, the subscriber is given a number picked from the allocation table 1 of temporary auxiliary numbers as follows:

### Allocation table 1

| $row_ no. | $next_ | $restante_ no. | $destination_ no. | $password_ | $start_ time | $end_ time | $disab led |
|---|---|---|---|---|---|---|---|
| 1 | 2 | 123401 | | 2465 | | | 1 |
| 2 | 8 | 123402 | | 8795 | | | 1 |
| 3 | 4 | 123403 | | 3663 | | | 1 |
| 4 | 00 | 123404 | | 1476 | | | 1 |
| 5 | 3 | 123405 | | 7636 | | | 1 |
| 6 | FF | 123406 | 096061 | 6678 | 961221 18:00 | 961231 12:15 | 0 |
| 7 | 5 | 123407 | | 8888 | | | 1 |
| 8 | 9 | 123408 | | 0989 | | | 1 |
| 9 | 7 | 123409 | | 9875 | | | 1 |
| 10 | 1 | 123410 | | 5533 | | | 1 |
| 11 | 12 | 123411 | | 2134 | | | 1 |
| 12 | 13 | 123412 | | 7869 | | | 1 |
| 13 | 14 | 123413 | | 9988 | | | 1 |
| 14 | 15 | 123414 | | 0597 | | | 1 |
| 15 | 16 | 123415 | | 1567 | | | 1 |
| 16 | 17 | 123416 | | 6522 | | | 1 |
| 17 | 18 | 123417 | | 2255 | | | 1 |
| 18 | 19 | 123418 | | 0238 | | | 1 |
| 19 | 20 | 123419 | | 0010 | | | 1 |
| 20 | 10 | 123420 | | 4533 | | | 1 |

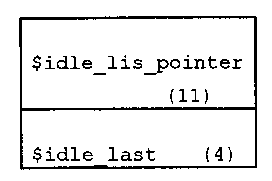

In the allocation table, numbers on rows 1-10 represent auxiliary numbers already once allocated (however, released in an order different from the number allocation order), row 6 is still in use and numbers of rows 11-20 have not yet been allocated at all.

Actually, each of the earlier used rows (1-10) still contain the previous information until the row is again used for number allocation. For the sake of clarity (to make the table easier to read), such (complete) information is not, however, shown for any other rows except row 6.

The password on each row of the table is changed every time the auxiliary number of the row is released from use. The password is computed using a random number generator in which the seeds are such variables as, e.g., the time of number release and the value to be written into the row variable $next of the row. In item 28, the value of the $idle_list pointer is read.

In item 28a is checked whether the service list has any free, unallocated auxiliary numbers; if the value of pointer $idle_list is 0, no numbers are free, whereby the flow diagram jumps to item 28b, otherwise to item 29.

In item 28b. the subscriber is given an announcement: *All our service numbers are in use, please call later again.*

Next, the call is terminated by the script at item 28c and the subscriber receives a busy tone from the switching center indicating termination of an attempted order of number allocation.

In item 29 are fetched the values of variables $restante no. and $password from an unassigned row of the table 1 indicated by pointer $idle_list.

In item 30 are written on the respective row of the table the following values of the variables
$destination no. = $a_number (permanent subscriber number of service orderer)
$start_time = $a_start_time (temporary number activation time entered by service orderer)
$end_time = $a_end_time (temporary number deactivation time entered by service orderer)

In item 31 is written:
$idle_list pointer = $next (the addressed row of the table is consulted for the next row with a free number in the table)

By setting variable $next = "reserved (FF)", the selected number (that is, row) in the table is marked to exclude the allocated number from the set of unallocated numbers.

In item 32, the flow diagram exits the table routine and returns values retrieved from the table to the announcing unit of the IN-SSP switching center that subsequently informs the service orderer (in item 33) of the unlisted auxiliary number that has been allocated for the desired time.

After the service orderer has correctly selected the active time period and an unallocated row has been found from the table. item 32 gives the following announcement:

*Your order has been logged. The number service will be activated at the time set by you.*

Correspondingly, item 33 gives the following announcement:

*Now prepare to write down your temporary unlisted auxiliary telephone number and your password.*
*Your unlisted temporary auxiliary telephone number is (109-9-)0790-12345.*
*Your password is 8679.*
*From now on, keep your temporary number and the password in a safe place* - *if you lose them, there is nobody who can help you, only you know them.*
*Dial 1 if you wish* a *replay of the numbers.*
*Dial 3 or hang up to confirm the activation of the service at your selected time.*

The subscriber is allowed to dial "1" for a desired number of times, as much as is needed for recording the allocated temporary unlisted auxiliary telephone number and the password.

In item 34, the connection is terminated and the subscriber receives a busy tone from the switching center indicating termination of the number allocation ordering operation.

If the subscriber enters the active time period of the temporary auxiliary number incorrectly, item 25 gives an announcement:

*Your entry was incorrect.*

Item 26 gives an announcement:

*Please now enter the month, day and time at which you want your temporary number to be deactivated; for instance, to set the deactivation time as October 18, 15:00, dial one-eight-one-zero-one-five-zero-zero. The time can be set to any full quarter of an hour. You can defer the deactivation time of your temporary number by maximally one week from activation time of the temporary number.*

Item 27 gives an announcement:

*Please, retry.*

If the subscriber makes five invalid entries in a sequence, item 24 triggers announcements 9 and 10:

*Your attempt to order this service has not been accepted, for further advice, please contact our customer service, number "nnnnnnn*...*"*.

Subsequently, the call is terminated at item 10 of the script and the caller hears the busy tone from the switching center as a signal of a terminated attempt of temporary auxiliary number ordering.

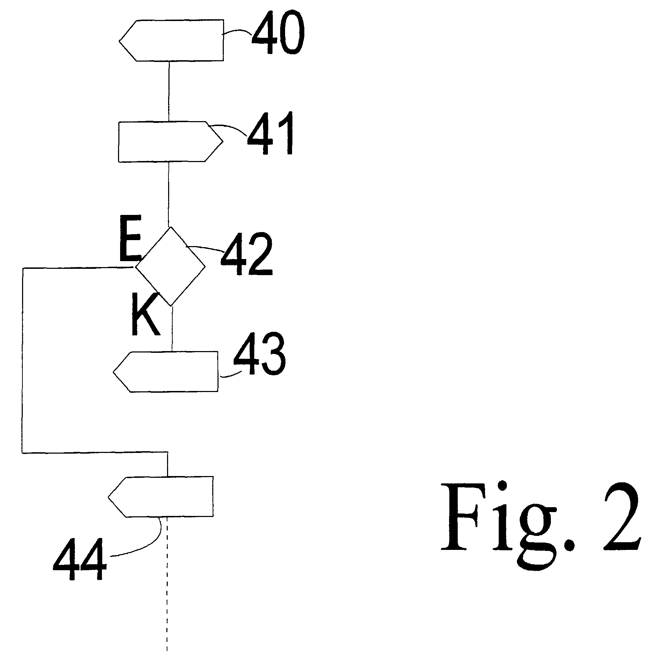

After the service orderer makes the allocated number public or discloses it in some other way, the use of the service takes place as shown in Fig. 2:

A caller (any A-subscriber) dials (according to the example): *(109-9-)0790-12345.* In item 40 of the flow diagram, the *prefix part [(109)-9-)0790] of this number* directs the call in the SSP switching center to trigger an IN procedure in which the following steps are carried out (the description below omits the actual script concentrating on the required functions only). In conjunction with the IN triggering, the SSP switch submits the intelligent network controller (SCP) the numbers in full format (109-9-0790-12345), complemented with the A-subscriber numbers, OCA and REDI numbers, etc.

In item 41 is tested if the dialled number is any of those logged in Table 1.

The selection of the correct row takes place by comparing row by row the content of column $restante_no. with the dialled number.

In item 42 is tested if the service is still valid (service is considered unavailable if item 41 above fails to find a matching row or when a matching row is found but the active time period (column $end_time) exhausted or the value of variable $disable is set to logic one indicating "disabled").

If the service is disabled, the caller is given an announcement
***service barred***

in item 43, whereby the SSP switching center sends the caller the busy tone as a signal of terminated attempt of calling.

If the service order is still valid and enabled, the IN control (SCP) in item 44 gives the SSP switching center a command to connect the incoming call to the subscriber's permanent number stored in column $subscriber_no. of the selected row in Table 1.

The incoming call is *always logged in a call receipt,* even when the called subscriber is busy or does not answer. This arrangement produces statistical evidence serving to prove the service orderer the function of the service in cases that the subscriber doubts its performance. E.g., when the temporary auxiliary number is used in classified ads, the seller may blame the telephone operator for defective function of the switching center on the basis of a low number of incoming calls although the real reason might have been a low interest value of the advertised object.

Typically, the caller number information (A-subscriber number or OCA and/or Redirect number) will not be forwarded to the subscriber receiving the calls via the ordered service, whereby the interest value of the service is elevated also in the group of potential callers: the calling A-subscriber or a subscriber transferring the call can have rely fully on the confidentiality of his/her telephone number.

The implementation of the invention also takes into account the requirement that the ordered service may not be transparent to the COLP (connected line presentation) function (this is a provision serving future technology when all trunk lines utilize ISUP signalling), whereby the identity of the subscriber ordering the service will remain hidden to, e.g., a party calling via a call transfer service.

A manual termination (or query of call statistics) occurs according to the invention as follows:

The service orderer calls a customer service number, e.g., *11*, arranged to initiate the temporary auxiliary number cancellation/control routine.

Alternatively, the service number may also be the same from which the service is ordered, whereby latter routine is carried out under a script control.

This cancellation service number directs the call to an IN triggering procedure carrying out the following steps (the description below omits the actual script concentrating on the required functions only):

The caller is requested to enter the password.

Next, the caller is requested to enter the temporary number associated with the password.

The password and temporary number entered by the subscriber are verified. If a mismatch is detected, the caller will not be informed which one is incorrect, but rather, a new entry of both the password and the temporary number is requested. With a positive match, the caller is requested to perform any of the following actions (whereby the control actions may alternatively be arranged in a menu-controlled manner when other functions beside simple number cancellation are desired):
1 = immediate cancellation of ordered temporary auxiliary number
2 = disable call connection via temporary auxiliary number (temporary number still valid)
3 = enable call connedtion via temporary auxiliary number (i.e., cancellation of items 2 or 4)
4 = connect the incoming calls to temporary announcement "thank you for your call, but another offer has already been accepted" (other announcements replacing this exemplary phrase can be used as well)
5 = change of number receiving calls (when desired this option may be offered even after the order is placed, whereby the call billing is anyhow directed to the original A-subscriber number from which the temporary auxiliary number service was ordered).

Cancellation of the temporary auxiliary number validation by the IN control unit (SCP) occurs automatically under calendar schedule or next telephone call initiated when the time stored in the first memory location $end_time is passed.

After the permanent cancellation of the temporary auxiliary number, a new password is computed for the released row of the allocation table, the row is linked to the *last free row* (indicated by pointer $idle_last) and the value of pointer $idle_last is changed to refer to this recently released row of the allocation table.

## Claims

1. A method of allocating a temporary auxiliary telephone number for a holder of a subscibtion agreement acting as an orderer for the corresponding service in an intelligent-network-based telephone system, in which system the A-subscriber number of the orderer is available,
**characterized** in that
- the identity of the orderer of the temporary auxiliary number is verified automatically on the basis of the A-subscriber number of the service orderer,
- by consulting a table, the orderer is allocated on the basis of the corresponding A-subscriber number a temporary unlisted auxiliary number having an active time period selectable by the orderer within preset limits, and
- the orderer of the service is given a password permitting alteration of the active time period of the temporary auxiliary number by the orderer only.

2. A method as defined in claim 1, **characterized** in that said temporary auxiliary number is allocated in a format determined by the telephone network operator.

3. A method as defined in claim 1, **characterized** in that the orderer of the service is allowed to select the temporary auxiliary number from a predetermined set of temporary numbers.

4. A method as defined in claim 1, **characterized** in that said password is redefined for each temporary auxiliary number at the lapse of the ordered active time period, whereby the password on each row of is altered in a random manner in conjunction with each order.
